(19) Europäisches Patentamt
European Patent Office
Office européen des brevets

(11) Veröffentlichungsnummer : **0 003 048**
**B2**

(12) # NEUE EUROPÄISCHE PATENTSCHRIFT

(45) Veröffentlichungstag der neuen Patentschrift : **24.08.83**

(51) Int. Cl.³ : **C 08 L 67/06**, C 08 F299/04

(21) Anmeldenummer : **78101845.2**

(22) Anmeldetag : **23.12.78**

(54) **Formmassen auf der Grundlage ungesättigter Polyester, Verfahren zu ihrer Herstellung und ihre Verwendung.**

(30) Priorität : **05.01.78 DE 2800468**
**28.11.78 DE 2851337**

(43) Veröffentlichungstag der Anmeldung : **25.07.79 Patentblatt 79/15**

(45) Bekanntmachung des Hinweises auf die Patenterteilung : **28.01.81 Patentblatt 81/04**

(45) Bekanntmachung des Hinweises auf die Entscheidung über den Einspruch : **24.08.83 Patentblatt 83/34**

(84) Benannte Vertragsstaaten :
**DE FR GB IT NL SE**

(56) Entgegenhaltungen :
**DE B 1 241 983**
**DE B 2 052 961**
**FR A 1 228 605**
**US A 3 577 478**

**Ind. Eng. Chem. Prod. Res. Dev., Vol., 2 No 2 (1963), A. Szayna, « Endene and centrene polyesters »**

**Plaste and Kautschuk, Heft 10, 1964, Z. Jedlinski u. P. Penczeck, « Ungesättigte Polyester mit kettenendständigen Maleinsäureestergruppen »**

**Die Akte enthält technische Angaben, die nach dem Eingang der Anmeldung eingereicht wurden und die nicht in dieser Patentschrift enthalten sind.**

(73) Patentinhaber : **BAYER AG**
**Zentralbereich Patente, Marken und Lizenzen**
**D-5090 Leverkusen 1, Bayerwerk (DE)**

(72) Erfinder : **von Harpe, Hannes, Dr.**
**Breslauer Strasse 31**
**D-4150 Krefeld (DE)**
Erfinder : **Bottenbruch, Ludwig, Dr.**
**Wöhlerstrasse 5**
**D-4150 Krefeld 1 (DE)**
Erfinder : **Peltzer, Bernd, Dr.**
**Scheiblerstrasse 99**
**D-4250 Krefeld 1 (DE)**
Erfinder : **Schulz-Walz, Hans Jochen, Dr.**
**Am Egelsberg 30**
**D-4150 Krefeld (DE)**

EP 0 003 048 B2

# Formmassen auf der Grundlage ungesättigter Polyester, Verfahren zu ihrer Herstellung und ihre Verwendung

Die vorliegende Erfindung betrifft Formmassen auf der Grundlage von « endständig ungesättigten » Urethangruppen-freien Polyestern, damit copolymerisierbaren Vinyl- oder Vinylidenverbindungen und kautschukelastischen Polymeren.

Formmassen aus Polyestern mit statistisch verteilten äthylenisch ungesättigten Struktureinheiten, copolymerisierbaren Monomeren und kautschukartigen Polymerisaten sind bekannt (vergl. DE-AS 1 166 467 ; 1 241 983 ; US-Patentschriften 3 231 631 ; 3 688 178 ; 3 882 078 ; 3 857 812 ; 3 674 893).

Aus diesen Formmassen hergestellte gehärtete Formkörper weisen zwar gute Massgenauigkeiten auf, besitzen aber doch eine nicht für alle Zwecke ausreichende Schlagzähigkeit. Ausserdem führt die mangelnde Verträglichkeit zwischen der kautschukartigen Komponente und dem Harz häufig zu Problemen in bezug auf die Handhabbarkeit der Lieferform, die entweder aus zwei Komponenten besteht oder zusätzliche Additive enthalten muss, die bei Kontakt der gehärteten Produkte mit Lösungsmitteln herausgelöst werden können, wodurch die günstige Chemikalienbeständigkeit der gehärteten ungesättigten Polyesterharzmassen verhindert wird.

Gegenstand der Erfindung sind härtbare Formmassen aus

a) 5 bis 77 Gew.-Teilen eines ungesättigten Urethangruppenfreien Polyesters,

b) 20 bis 80 Gew.-Teilen einer damit copolymerisierbaren Vinyl- oder Vinylidenverbindung, und

c) 3 bis 25 Gew.-Teilen eines kautschukelastischen Polymeren mit einer Glasübergangstemperatur zwischen − 90 und 10 °C,

dadurch gekennzeichnet, daß der Polyester a) endständig ungesättigt ist und daß die spezifische Bruchflächenenergie des bei der Härtung entstehenden Copolymerisats aus a) und b), d. h. in Abwesenheit von c) $> 0{,}5 \cdot 10^{-2}$, vorzugsweise zwischen $0{,}5 \cdot 10^{-2}$ und $10^{-1}$, J/cm$^2$ beträgt (gemessen nach der Methode von L. J. Broutman, F. J. McGarry bei 25 °C, J. Applied Polym. Sci. 9, 589 f [1965]).

Die Formmassen der Erfindung stellen relativ niedrigviskose klare Lösungen oder lagerstabile Dispersionen dar. Bei der Härtung liefern sie Formkörper mit beträchtlich höherer Schlagzähigkeit bei praktisch unveränderter Wärmeformbeständigkeit, verglichen mit den bekannten Massen auf der Basis von Polyestern mit statistisch verteilten ungesättigten Struktureinheiten.

« Endständig ungesättigte » Urethangruppenfreie Polyester im Sinne der Erfindung sind solche, in denen jeweils der erste Dicarbonsäurerest, von den beiden Enden der linearen Polymerkette aus gezählt, eine äthylenisch ungesättigte Doppelbindung enthält, während das restliche Molekül keine weitere copolymerisierbare äthylenisch ungesättigte Doppelbindung mehr besitzt.

« Endständig ungesättigte » Urethangruppenfreie Polyester sind bekannt (vergl. DE-AS 2 052 961). Je nach Zusammensetzung bilden sie nach Copolymerisation mit Vinyl- oder Vinylidenverbindungen kautschukelastische, lederartige oder starre, glasartig transparente Körper. Die Erhöhung der Schlagzähigkeit wird auch hier durch Verminderung der Wärmeformbeständigkeit, der Festigkeit und der Steifigkeit erkauft.

Der Polyester a) und das kautschukelastische Polymere c) müssen ganz bestimmte Bedingungen erfüllen, damit die gewünschten Eigenschaften der aus den Formmassen hergestellten Formkörper erreicht werden :

Die erfindungsgemässen Formmassen bilden vor der Härtung eine relativ niedrigviskose klare Mischung bzw. eine lagerstabile Dispersion und nach der Härtung ein zweiphasiges System mit einer Glasübergangstemperatur zwischen − 90 und + 10 °C für die kautschukartige Phase und einer anderen Glasübergangstemperatur zwischen 50 und 250 °C für die Harzphase, gekennzeichnet durch die Lage der Verlustmodulmaxima des komplexen Schubmoduls in Abhängigkeit von der Temperatur bei 1 Hz, oder durch elektronenmikroskopisch nachweisbare Teilchen mit einem mittleren Durchmesser von 0,1 bis 100 μm.

Das Merkmal, wonach die spezifische Bruchflächenenergie des Copolymerisats der Komponenten a) und b) $> 0{,}5 \cdot 10^{-2}$ J/cm$^2$ betragen soll, erhält man unter Berücksichtigung der Konstitution von a) und b) nach einigen einfachen Regeln :

Eine Erhöhung der Vernetzungsdichte im a/b-Copolymerisat, eine Steigerung des Anteils aromatischer und/oder cycloaliphatischer Gruppen und eine Verminderung der Anzahl der Atome zwischen den beiden Doppelbindungen im Polyester a) führen zu einer Senkung der spezifischen Bruchflächenenergie. Bei Kenntnis dieser Regeln kann man — bei vorgegebenen Komponenten auch schon allein durch Festlegung des Mischungsverhältnisses a/b — im Zweifelsfall nach einer geringen Anzahl orientierender Vorversuche — die bevorzugte Ausführungsform mühelos und reproduzierbar herstellen.

Bevorzugte « endständig ungesättigte » Urethangruppen-freie Polyester entsprechen der Formel I

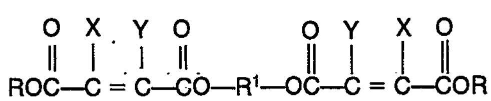

worin $R^1$ den um zwei Hydrozylgruppen verminderten zweiwertigen Rest eines Polyesters, der keine, α,β-äthylenisch ungesättigten Gruppen enthält, X, Y und R Wasserstoff oder $C_1$-$C_6$-Alkyl bedeuten. Diese « endständig ungesättigten » Urethangruppen-freien Polyester können durch ein mehrstufiges Verfahren hergestellt werden, nämlich durch die Umsetzung von 1 Mol mindestens einer organischen Dicarbonsäure mit 1,05-2,0 Mol mindestens eines organischen Diols und die nachfolgende Umsetzung von 1 Mol des resultierenden Hydroxylgruppen enthaltenden gesättigten Polyesters mit der etwa äquivalenten Menge, vorzugsweise 1,9-2,2 Mol, mindestens eines α,β-äthylenisch ungesättigten Dicarbonsäureanhydrids, der entsprechenden ungesättigten Dicarbonsäure oder ihres Halbesters.

Die erfindungsgemässen Formmassen können also erhalten werden, indem man in erster Stufe 1 Mol mindestens einer organischen Dicarbonsäure mit 1,0-2,0 Mol mindestens eines organischen Diols, vorzugsweise in der Schmelze bei 150-220 °C, gegebenenfalls in Anwesenheit üblicher Inhibitoren, unter Wasserabspaltung verestert und in zweiter Stufe 1 Mol des so erhaltenen, OH-Gruppen enthaltenden Vorproduktes mit der etwa äquivalenten Menge, vorzugsweise 1,9 bis 2,2 Mol, mindestens eines α,β-äthylenisch ungesättigten Dicarbonsäureanhydrids, der entsprechenden ungesättigten Dicarbonsäure oder ihres Monoesters bei etwa 60 bis 140 °C in der Schmelze addiert oder, wie für die 1. Stufe beschrieben worden ist, umsetzt, und

5-77 Gew.-Teile des so erhaltenen « endständig ungesättigten » Urethangruppen-freien Polyethers a) mit

20-80 Gew.-Teilen einer damit copolymerisierbaren Vinyl- oder Vinylidenverbindung b),

3-25 Gew.-Teilen eines kautschukelastischen Polymeren c) und gegebenenfalls weiteren Hilfsmitteln und Zusätzen mischt mit der Maßgabe, daß man den Polyester a) so auswählt, daß die spezifische Bruchflächenenergie des bei der Härtung entstehenden Copolymerisates aus a) und b) $> 0,5 \cdot 10^{-2}$, vorzugsweise zwischen $0,5 \cdot 10^{-2}$ und $10^{-1}$, J/$cm^2$ beträgt.

Als hydroxylgruppenhaltige lineare Polyester, die für die Herstellung « endständig ungesättigter » Polyester bevorzugt sind, kommen Polykondensationsprodukte von aliphatischen, cycloaliphatischen und/oder aromatischen Dicarbonsäuren mit in der Regel 2-16 C-Atomen oder deren esterbildenden Derivaten mit mindestens einem Diol mit in der Regel 2 bis 24 C-Atomen in Frage. Diese linearen Polyester sollen ein mittleres Molekulargewicht (Zahlenmittel $\overline{Mn}$) von 200 bis 3 000 besitzen.

Für die Herstellung der linearen Polyester bevorzugte organische Diole sind z. B. Dihydroxyverbindungen mit 2-24 C-Atomen wie Äthylenglykol, Propandiol-1,2 und -1,3, Diäthylenglykol, Dipropylenglykol, Butandiol-1,2, -1,3 und -1,4, Neopentylglykol, 2-Äthylpropandiol-1,3, Hexandiol-1,6, 2,2,-Bis-(4-hydroxycyclohexyl)-propan, bis-oxalkyliertes Bisphenol A, sowie hydroxylgruppenhaltige lineare Polyester, die frei von copolymerisierbaren Kohlenstoff-Kohlenstoff-Mehrfachbindungen sind ; bevorzugte Dicarbonsäuren sind z. B. Bernsteinsäure, Adipinsäure, Sebacinsäure, Phthalsäure, Iso- und Terephthalsäure, Hexa- oder Tetrahydrophthalsäure, Endomethylentetrahydrophthalsäure, Tetrachlorphthalsäure, Hexachlor-endomethylentetrahydrophthalsäure.

Für die Herstellung der « endständig ungesättigten » Urethangruppen-freien Polyester bevorzugte Verbindungen sind α,β-äthylenisch ungesättigte Dicarbonsäureanhydride bzw. Dicarbonsäuren mit in der Regel 4 bis 10 C-Atomen, beispielsweise Maleinsäureanhydrid, Citraconsäureanhydrid, Maleinsäure, Fumarsäure, Itaconsäure, Mesaconsäure oder Chlormaleinsäure oder deren Halbester.

Bevorzugte copolymerisierbare Vinyl- und Vinylidenverbindungen im Sinne der Erfindung sind in der Polyestertechnologie gebräuchliche ungesättigte Verbindungen, die bevorzugt α-substituierte Vinylgruppen oder β-substituierte Allylgruppen tragen, vorzugsweise Styrol ; aber auch beispielsweise kernchlorierte und alkylierte bzw. -alkenylierte Styrole, wobei die Alkyl- und Alkenylgruppen 1-4 bzw. 2-4 Kohlenstoffatome enthalten können, wie z. B. Vinyltoluol, Divinylbenzol, α-Methylstyrol, tert.-Butylstyrole, Chlorstyrole ; Vinylester von Carbonsäuren mit 2-6 Kohlenstoffatomen, bevorzugt Vinylacetat ; Vinylpyridin, Vinylnaphthalin, Vinylcyclohexan, Acrylsäure und Methacrylsäure und/oder ihre Ester (vorzugsweise Vinyl-, Allyl- und Methallylester) mit 1-4 Kohlenstoffatomen in der Alkoholkomponente, ihre Amide und Nitrile, Maleinsäureanhydrid, -halb- und -diester mit 1-4 Kohlenstoffatomen in der Alkoholkomponente, -halb- und -diamide oder cyclische Imide wie N-Methylmaleinimid oder N-Cyclohexylmaleinimid ; Allylverbindungen wie Allylbenzol und Allylester, wie Allylacetat, Phthalsäurediallylester, Isophthalsäurediallylester, Fumarsäurediallylester, Allylcarbonate, Diallylcarbonate, Triallylphosphat und Triallylcyanurat.

Bevorzugte kautschukelastische Polymere sind z. B. solche auf Basis von Naturkautschuk oder synthetischen Kautschuken, z. B. Polymerisate aus konjugierten Diolefinen, wie Butadien, Dimethylbutadien, Isopren und seinen Homologen oder Mischpolymerisate konjugierter Diolefine mit polymerisierbaren Vinyl- und Vinylidenverbindungen, wie Styrol, α-Methylstyrol, Acrylnitril, Methacrylnitril, Acrylate, Methacrylate, z. B. Acrylnitril, Butadien-Kautschuke, Acrylatkautschuke, Chlorkautschuke, Acrylnitril/Butadien/Styrol-Copolymerisate (ABS) ; ferner Polyalkylenoxide, Polyactone wie Polycaprolacton, Polylactame wie Polycaprolactam ; gesättigte Polyester, Polysilikone und Polycarbonate, sofern sie so modifiziert sind, dass sie kautschukähnliche Eigenschaften besitzen ; vorzugsweise aber kautschukähnliche Athylencopolymerisate und kautschukähnliche Polyurethane.

Als Äthylencopolymerisate kommen vorzugsweise Copolymerisate aus Äthylen und Vinylestern von aliphatischen gesättigten Monocarbonsäuren mit 1 bis 18 C-Atomen, insbesondere Vinylacetat und -propionat, mit einem Vinylesteranteil von 10-90 Gew.-% und einer Mooney-Viskosität von mindestens

5 Mooney (gemessen nach DIN 53 523) sowie Pfropfpolymerisate auf Basis dieser Polymeren in Betracht.

Als Pfropfmonomere eignen sich vorzugsweise Vinyl- und Vinylidenaromaten wie Vinyltoluol, α-Methylstyrol, tert.-Butylstyrol, Chlorstyrole, bevorzugt aber unsubstituiertes Styrol selbst; Vinylacetat, (Meth)Acrylsäure, ihre Nitrile und Ester, deren Alkoholkomponente 1-8 C-Atome enthalten können, wie z. B. Methylmethacrylat oder Äthylacrylat, (Meth)Acrylnitril, Maleinsäureanhydrid, Maleinsäurehalb- und -diester mit 1-8 C-Atomen in der Alkoholkomponente, Isopren. Selbstverständlich können sowohl als Pfropfsubstrate als auch als Pfropfmonomere Mischungen der aufgeführten Verbindungen Verwendung finden. Zu den bevorzugten Polymerisaten gehören ferner Vinylalkohol-enthaltende Produkte, die durch teilweise Verseifung der aufgeführten Äthylen/Vinylester-Copolymeren bzw. der Pfropfpolymerisate hergestellt werden können und Hydroperoxidgruppen enthaltende Produkte, die durch Oxidation der aufgeführten Substanzen herstellbar sind. Die vorgenannten Pfropfpolymerisate können nach bekannten Verfahren hergestellt werden.

So können einzusetzende Pfropfpolymerisate aus Äthylen/Vinylester-Copolymerisaten mit aufgepfropften Einheiten eines Vinylaromaten und (Meth)Acrylnitril z. B. nach den Verfahren der britischen Patentschrift 917 499 oder den deutschen Offenlegungsschriften 1 964 479 und 2 137 780 hergestellt werden.

Die bevorzugt einzusetzenden Pfropfpolymerisate aus Äthylen/Vinylester-Copolymerisaten mit aufgepfropften Einheiten eines Gemisches aus Vinylaromaten, (Meth)Acrylnitril und α-Olefinen mit 2-18 C-Atomen können nach den Verfahren der deutschen Offenlegungsschriften 2 215 588 oder 2 305 681 hergestellt werden.

Als Vinylester für die Herstellung der Äthylen/Vinylester-Copolymerisat-Pfropfgrundlage kommen organische Vinylester von gesättigten, ggf. durch Halogen, insbesondere durch Chlor, substituierten Monocarbonsäuren mit 1-18 C-Atomen in Frage. Namentlich seien genannt: Vinylformiat, Vinylacetat, Vinylpropionat, Vinylchlorpropionat, Vinylbutyrat, Vinylisobutyrat, Vinylcapronat, Vinyllaurinat, Vinylmyristinat, Vinylstearat, Vinylbenzoat, vorzugsweise Vinylacetat.

Die Äthylen/Vinylester-Copolymerisate werden nach bekannten Verfahren der Hoch- oder Mitteldrucksynthese, ggf. in Lösungsmitteln wie tert.-Butanol, hergestellt.

Als aufgepfropfte Vinylaromaten seien kernsubstituierte Alkylstyrole mit 1-5 C-Atomen im Alkylrest wie 4-Methylstyrol, α-Methylstyrol, Halogenstyrole wie 4-Chlorstyrol oder deren Mischungen, vorzugsweise Styrol, genannt.

Die aufgepfropften Monoolefine können 2-18, vorzugsweise 2-8 C-Atome besitzen.

Namentlich seien folgende Monoolefine genannt: Äthylen, Propylen, Buten-1, Buten-2, Isobutylen, 2-Methylbuten-2, 3-Methylbuten-1, Diisobutylen, Triisobutylen, Penten-1,4-Methylpenten-1, Octadecen-1, Cyclopenten. Bevorzugt sind Propylen, Buten-1, Isobutylen oder deren Mischungen.

Die kautschukelastischen Polyurethane c) sind vorzugsweise linear aufgebaut und weisen mittlere Molekulargewichte von 10 000 bis 1 000 000, vorzugsweise 20 000 bis 500 000 auf (membranosmometrisch bestimmt). Die Herstellung kann auf an sich bekannte Weise durch Umsetzung einer Verbindung mit mindestens zwei gegenüber Isocyanaten reaktionsfähigen Wasserstoffatomen, vorzugsweise einer Polyhydroxylverbindung mit einem Molekulargewicht über 600, ggf. einer Verbindung mit zwei Isocyanatreaktiven Wasserstoffatomen und einem Molekulargewicht unter 600, und einem Polyisocyanat erfolgen.

Als für die Herstellung der kautschukelastischen Polymeren c) einzusetzende Ausgangskomponenten kommen aliphatische, cycloaliphatische, araliphatische, aromatische und heterocyclische Polyisocyanate in Betracht, wie sie z. B. von W. Siefken in Justus Liebigs Annalen der Chemie 562, Seiten 75 bis 136, beschrieben werden, beispielsweise Äthylen-diisocyanat, 1,4-Tetramethylendiisocyanat, 1,6-Hexamethylendiisocyanat, 1,12-Dodecandiisocyanat, Cyclobutan-1,3-diisocyanat, Cyclohexan-1,3- und -1,4-diisocyanat sowie beliebige Gemische dieser Isomeren, 1-Methyl-2,4-diisocyanato-cyclohexan, 1-Methyl-2,6-diisocyanato-cyclohexan, 1-Isocyanato-3,3,5-trimethyl-5-isocyanato-methyl-cyclohexan (DE-AS 1 202 785, US-Patentschrift 3 401 190), 2,4- und 2,6-Hexahydrotoluylendiisocyanat sowie beliebige Gemische dieser Isomeren, Hexahydro-1,3- und/oder -1,4-phenylen-diisocyanat, Perhydro-2,4'- und/oder -4,4'-diphenylmethan-diisocyanat, 1,3- und 1,4-Phenylendiisocyanat, 2,4- und 2,6-Toluylendiisocyanat, sowie beliebige Gemische dieser Isomeren, Diphenylmethan-2,4'- und/oder -4,4'-diisocyanat, 4,4'-Diphenylpropandiisocyanat, Naphthylen-1,5-diisocyanat, Triphenylmethan-4,4',4''-triisocyanat, Polyphenyl-polymethylenpolyisocyanate, wie sie durch Anilin/Formaldehyd-Kondensation und anschliessende Phosgenierung erhalten und z. B. in den britischen Patentschriften 874 430 und 848 671 beschrieben werden, m- und p-Isocyanatophenylsulfonyl-isocyanate gemäss der amerikanischen Patentschrift 3 454 606, perchlorierte Arylpolyisocyanate, wie sie z. B. in der deutschen Auslegeschrift 1 157 601 (amerikanische Patentschrift 3 277 138) beschrieben werden, Carbodiimidgruppen aufweisende Polyisocyanate, wie sie in der deutschen Patentschrift 1 092 007 (amerikanische Patentschrift 3 152 162) beschrieben werden, Diisocyanate, wie sie in der amerikanischen Patentschrift 3 492 330 beschrieben werden, Allophanatgruppen aufweisende Polyisocyanate, wie sie z. B. in der britischen Patentschrift 994 890, der belgischen Patentschrift 761 626 und der veröffentlichten holländischen Patentanmeldung 7 102 524 beschrieben werden, Isocyanuratgruppen aufweisende Polyisocyanate, wie sie z. B. in der amerikanischen Patentschrift 3 001 973, in den deutschen Patentschriften 1 022 789, 1 222 067 und 1 027 394 sowie in den deutschen Offenlegungsschriften 1 929 034 und 2 004 048 beschrieben werden, Urethangruppen aufweisende Polyisocyanate, wie sie z. B. in der belgischen Patentschrift 752 261 oder in

der amerikanischen Patentschrift 3 394 164 beschrieben werden, acylierte Harnstoffgruppen aufweisende Polyisocyanate gemäss der deutschen Patentschrift 1 230 778, Biuretgruppen aufweisende Polyisocyanate, wie sie z. B. in der deutschen Patentschrift 1 101 394 (amerikanische Patentschriften 3 124 605 und 3 201 372) sowie in der britischen Patentschrift 889 050 beschrieben werden, durch Telomerisationsreaktionen hergestellte Polyisocyanate, wie sie z. B. in der amerikanischen Patentschrift 3 654 106 beschrieben werden, Estergruppen aufweisende Polyisocyanate, wie sie zum Beispiel in den britischen Patentschriften 965 474 und 1 072 956, in der amerikanischen Patentschrift 3 567 763 und in der deutschen Patentschrift 1 231 688 genannt werden, Umsetzungsprodukte der obengenannten Isocyanate mit Acetalen gemäss der deutschen Patentschrift 1 072 385 und polymere Fettsäurereste enthaltende Polyisocyanate gemäss der amerikanischen Patentschrift 3 455 883.

Es ist auch möglich, die bei der technischen Isocyanatherstellung anfallenden, Isocyanatgruppen aufweisenden Destillationsrückstände, gegebenenfalls gelöst in einem oder mehreren der vorgenannten Polyisocyanate, einzusetzen. Ferner ist es möglich, beliebige Mischungen der vorgenannten Polyisocyanate zu verwenden.

Besonders bevorzugt werden in der Regel die technisch leicht zugänglichen Polyisocyanate, z. B. das 2,4- und 2,6-Toluylendiisocyanat sowie beliebige Gemische dieser Isomeren (« TDI »), Polyphenylpolymethylen-polyisocyanate, wie sie durch Anilin/Formaldehyd-Kondensation und anschliessende Phosgenierung hergestellt werden (« rohes MDI »), und Carbodiimidgruppen, Urethangruppen, Allophanatgruppen, Isocyanuratgruppen, Harnstoffgruppen oder Biuretgruppen aufweisende Polyisocyanate (« modifizierte Polyisocyanate »).

Bevorzugt einzusetzende Ausgangskomponenten sind ferner Verbindungen mit mindestens zwei gegenüber Isocyanaten reaktionsfähigen Wasserstoffatomen mit einem Molekulargewicht in der Regel von 600-10 000. Hierunter versteht man neben Aminogruppen Thiolgruppen oder Carboxylgruppen aufweisenden Verbindungen, vorzugsweise Polyhydroxylverbindungen, insbesondere zwei bis acht Hydroxylgruppen aufweisende Verbindungen, speziell solche mit zwei Hydroxylgruppen vom Molekulargewicht 800 bis 10 000, vorzugsweise 1 000 bis 6 000, z. B. mindestens zwei, in der Regel 2 bis 8, vorzugsweise aber 2, Hydroxylgruppen aufweisende Polyester, Polyäther, Polythioäther, Polyacetale, Polycarbonate, Polyamide und Polyesteramide, wie sie für die Herstellung von homogenen und von zellförmigen Polyurethanen an sich bekannt sind.

Bevorzugte Polyhydroxylverbindungen mit einem Molekulargewicht über 600 sind neben Polyesteramiden oder Polyacetalen insbesondere lineare oder vorwiegend lineare Polyester und Polyäther.

Die in Frage kommenden Hydroxylgruppen aufweisenden Polyester sind z. B. Umsetzungsprodukte von mehrwertigen, vorzugsweise zweiwertigen und gegebenenfalls zusätzlich dreiwertigen Alkoholen mit mehrbasischen, vorzugsweise zweibasischen Carbonsäuren. Anstelle der freien Polycarbonsäuren können auch die entsprechenden Polycarbonsäureanhydride oder entsprechende Polycarbonsäureester von $C_1$-$C_6$-Alkoholen oder deren Gemische zur Herstellung der Polyester verwendet werden. Die Polycarbonsäuren können aliphatischer, cycloaliphatischer, aromatischer und/oder heterocyclischer Natur sein und gegebenenfalls, z. B. durch Halogenatome, ein- oder mehrfachsubstituiert und/oder ungesättigt sein.

Als bevorzugte Beispiele hierfür seien genannt : Bernsteinsäure, Adipinsäure, Pimelinsäure, Korksäure, Azelainsäure, Sebacinsäure, Phthalsäure, Isophthalsaüre, Terephthalsäure, Trimellitsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimere und trimere Fettsäuren wie Ölsäure, gegebenenfalls in Mischung mit monomeren Fettsäuren, Terephthalsäuredimethylester und Terephthalsäure-bis-glykolester. Als bevorzugte mehrwertige Alkohole kommen z. B. Äthylenglykol, 2-Äthylpropandiol-1,3, Propylenglykol-(1,2) und-(1,3), Diäthylen- und Dipropylenglykol, Butylenglykol-(1,4), -(1,3) und -(2,3), Pentandiol-1,5, Hexandiol-(1,6), Octandiol-(1,8), Neopentylglykol, Cyclohexandimethanol (1,4-Bis-hydroxymethylcyclohexan), 2-Methyl-1,3-propandiol, Glycerin, Trimethylolpropan, Hexantriol-(1,2,6), Butantriol-(1,2,4), Trimethyloläthan, Pentaerythrit, Methylglykosid, ferner Diäthylenglykol, Triäthylenglykol, Tetraäthylenglykol, höhere Polyäthylenglykole, Polypropylenglykole, Dibutylenglykol und höhere Polybutylenglykole in Frage. Die Polyester können endständige Carboxylgruppen aufweisen. Auch Polyester aus Lactonen, z. B. ε-Caprolacton, oder aus geradkettigen Hydroxycarbonsäuren mit mindestens 5 Kohlenstoffatomen, z. B. ω.-Hydroxycapronsäure, sind einsetzbar.

Die Polyester werden unter solchen Bedingungen hergestellt, dass ihre Endgruppen zumindest zum überwiegenden Teil aus Hydroxylgruppen bestehen. Ausserdem eignen sich auch Polyäther, wie Propylenoxid- oder Tetrahydrofuranpolymerisate oder Polythioäther, wie Kondensationsprodukte des Thiodiglykols mit sich selbst oder anderen Diolen. Diese Produkte besitzen im allgemeinen ein mittleres Molekulargewicht von etwa 600-5 000, vorzugsweise von 1 000-2 500.

Auch die erfindungsgemäss in Frage kommenden, mindestens zwei, in der Regel zwei bis acht, vorzugsweise zwei Hydroxylgruppen aufweisenden Polyäther sind solche der an sich bekannten Art und werden z. B. durch Polyaddition von Epoxiden wie Äthylenoxid, Propylenoxid, Butylenoxid, Tetrahydrofuran, Styroloxid oder Epichlorhydrin mit sich selbst, z. B. in Gegenwart von $BF_3$, oder durch Anlagerung dieser Epoxide, gegebenenfalls im Gemisch oder nacheinander, an Startkomponenten mit reaktionsfähigen Wasserstoffatomen wie Wasser, Alkohole, Ammoniak oder Amine, z. B. Methanol, Äthanol, Äthylenglykol, Propylenglykol-(1,3) oder -(1,2) Dihydroxy-diphenylpropan, Butylenglykol-(1,4) oder -(2,3), Hexandiol-(1,6), Octandiol-(1,8), Neopentylglykol, 1,4-Bis-(hydroxymethyl)-cyclohexan, 2-Methyl-propan-1,3-diol, Glycerin, Hexantriol-(1,2,6), Butantriol-(1,2,4), Trimethyloläthan, Pentaerythrit, Phenol, Resorcin, Isononylphenol, Hydrochinon, 1,2,2-Tris-(hydroxyphenyl)-äthan, Methylamin, Äthylendiamin, Tetra- oder Hexamethylendiamin, Diäthylentriamin, Äthanolamin, Di- und Triäthanolamin, Anilin, Phenylendiamin, 2,4- und 2,6-Diaminotoluol und Polyphenyl-polymethylenpolyamine, wie sie durch Anilin/Formaldehyd-Kondensation erhalten werden, hergestellt.

Vielfach sind solche Polyäther bevorzugt, die überwiegend (bis zu 90 Gew.-%, bezogen auf alle vorhandenen OH-Gruppen im Polyäther) primäre OH-Gruppen aufweisen. Auch durch Vinylpolymerisate modifizierte Polyäther, wie sie z. B. durch Polymerisation von Styrol und Acrylnitril in Gegenwart von Polyäthern entstehen (amerikanische Patentschriften 3 383 351, 3 304 273, 3 523 093, 3 110 695, deutsche Patentschrift 1 152 536), sind geeignet.

Unter den Polythioäthern seien insbesondere die Kondensationsprodukte von Thiodiglykol mit sich selbst und/oder mit anderen Glykolen, Dicarbonsäuren, Formaldehyd, Aminocarbonsäuren oder Aminoalkoholen angeführt. Je nach den Co-Komponenten handelt es sich bei den Produkten um Polythiomischäther, Polythioätherester oder Polythioätheresteramide.

Als bevorzugte Polyacetale kommen z. B. die aus Glykolen, wie Diäthylenglykol, Triäthylenglykol, 4,4'-Dioxydiphenyldimethylmethan, Hexandiol und Formaldehyd herstellbaren Verbindungen in Frage. Auch durch Polymerisation cyclischer Acetale lassen sich erfindungsgemäss geeignete Polyacetale herstellen.

Als bevorzugte Hydroxylgruppen aufweisende Polycarbonate kommen solche der an sich bekannten Art in Betracht, die z. B. durch Umsetzung von Diolen wie Propandiol-(1,3), Butandiol-(1,4) und/oder Hexandiol-(1,6), Diäthylenglykol, Triäthylenglykol oder Tetraäthylenglykol mit Diarylcarbonaten, z. B. Diphenylcarbonat, oder Phosgen hergestellt werden können.

Zu den bevorzugten Polyesteramiden und Polyamiden zählen z. B. die aus mehrwertigen gesättigten und ungesättigten Carbonsäuren bzw. deren Anhydriden und mehrwertigen gesättigten und ungesättigten Aminoalkoholen, Diaminen, Polyaminen und ihren Mischungen gewonnenen, vorwiegend linearen Kondensate.

Auch bereits Urethan- oder Harnstoffgruppen enthaltende Polyhydroxylverbindungen sowie gegebenenfalls modifizierte natürliche Polyole, wie Ricinusöl, Kohlenhydrate wie Stärke, sind verwendbar. Auch Anlagerungsprodukte von Alkylenoxiden an Phenol/Formaldehyd-Harze oder auch an Harnstoff/Formaldehydharze sind erfindungsgemäss einsetzbar.

Vertreter dieser erfindungsgemäss zu verwendenden Verbindungen sind z. B. in High Polymers, Vol. XVI, « Polyurethanes, Chemistry and Technology » verfasst von Saunders-Frisch, Interscience Publishers, New York, London, Band I, 1962, Seiten 32-42 und Seiten 44-54 und Band II, 1964, Seiten 5-6 und 198-199, sowie im Kunststoff-Handbuch, Band VII, Vieweg-Höchtlen, Carl Hanser-Verlag, München, 1966, z. B. auf den Seiten 45-71, beschrieben.

Selbstverständlich können Mischungen der oben genannten Verbindungen mit mindestens zwei gegenüber Isocyanaten reaktionsfähigen Wasserstoffatomen mit einem Molekulargewicht von 600-10 000, z. B. Mischungen von Polyäthern und Polyestern, eingesetzt werden.

Als erfindungsgemäss gegebenenfalls einzusetzende Ausgangskomponenten für die Herstellung der kautschukelastischen Polyurethane kommen auch Verbindungen mit mindestens zwei gegenüber Isocyanaten reaktionsfähigen Wasserstoffatomen mit einem Molekulargewicht von 32-600 in Frage. Auch in diesem Fall versteht man hierunter Hydroxylgruppen und/oder Aminogruppen und/oder Thiolgruppen und/oder Carboxylgruppen aufweisende Verbindungen, vorzugsweise Hydroxylgruppen und/oder Aminogruppen aufweisende Verbindungen, die als Kettenverlängerungsmittel dienen. Diese Verbindungen weisen in der Regel 2 bis 8, vorzugsweise 2, gegenüber Isocyanaten reaktionsfähige Wasserstoffatome auf.

An Verbindungen mit mindestens zwei mit Isocyanaten reaktionsfähigen Wasserstoffatomen und einem Molekulargewicht unter 600 (Kettenverlängerer) seien neben Wasser oder einfachen Glykolen auch Glykole mit Harnstoff-, Urethan-, Carbonamid- oder Estergruppen sowie solche mit tertiären Stickstoffatomen genannt. Auch auf die Möglichkeit der Verwendung von Glykolen mit aromatischen Ringsystemen, beispielsweise 1,5-Naphthylen-β-dioxäthyläther oder Hydrochinon-β-dioxäthyläther, sei hingewiesen. Weiterhin sind auch Diamine, wie o-Dichlorbenzidin, 2,5-Dichlor-p-phenylendiamin oder 3,3'-Dichlor-4,4'-diaminodiphenylmethan ebenso geeignet wie Aminoalkohole, wie z. B. N-Allyläthanolamin, Amino- oder Oxycarbonsäuren.

Als Beispiele für derartige Verbindungen seien genannt : Wasser, Athylenglykol, Propylenglykol-(1,2) und -(1,3), Butylenglykol-(1,4) und -(2,3),Pentandiol-(1,5), Hexandiol-(1,6), Octandiol-(1,8), Neopentylglykol, 1,4-Bis-hydroxymethyl-cyclohexan, 2-Methyl-1,3-propandiol, Glycerin, Trimethylolpropan, Hexantriol-(1,2,6), Trimethyloläthan, Pentaerythrit, Diäthylenglykol, Triäthylenglykol, Tetraäthylenglykol, Polyäthylenglykole mit einem Molekulargewicht bis 600, Dipropylenglykol, Polypropylenglykole mit einem Molekulargewicht bis 600, Dibutylenglykol, Polybutylenglykole mit einem Molekulargewicht bis 600, 4,4'-Dihydroxydiphenylpropan, Bis-hydroxymethyl-hydrochinon, Äthanolamin, Diäthanolamin, Triäthanolamin, 3-Aminopropanol, Äthylendiamin, 1,3-Diaminopropan, 1-Mercapto-3-aminopropan, 4-Hydroxy- oder -Aminopthalsäure, Bernsteinsäure, Adipinsäure, Hydrazin, N,N'-Dimethylhydrazin, 4,4'-Diamindiphenylmethan, Toluylendiamin, Methylen-bis-chloranilin, Methylen-bis-anthranilsäureester, Diaminobenzoesäureester und die isomeren Chlorphenylendiamine.

Auch in diesem Fall können Mischungen von verschiedenen Verbindungen mit mindestens zwei gegenüber Isocyanaten reaktionsfähigen Wasserstoffatomen mit einem Molekulargewicht von 32-600 verwendet werden.

Erfindungsgemäss können auch Polyhydroxylverbindungen eingesetzt werden, in welchen hochmolekulare Polyaddukte bzw. Polykondensate in feindisperser oder gelöster Form enthalten sind. Derartige modifizierte Polyhydroxylverbindungen werden erhalten, wenn man Polyadditionsreaktionen (z. B. Umsetzungen zwischen Polyisocyanaten und aminofunktionellen Verbindungen) bzw. Polykondensationsreaktionen (z. B. zwischen Formaldehyd und Phenolen und/oder Aminen) direkt *in situ* in den oben genannten Hydroxylgruppen aufweisenden Verbindungen ablaufen lässt. Derartige Verfahren sind beispielsweise in den Deutschen Auslegeschriften 1 168 075 und 1 260 142 sowie den Deutschen Offenlegungsschriften 2 324 134, 2 423 984, 2 512 385, 2 513 815, 2 550 796, 2 550 797, 2 550 833 und 2 550 862 beschrieben. Es ist aber auch möglich, gemäss US-Patent 3 869 413 bzw. Deutscher Offenlegungsschrift 2 550 860 eine fertige wässrige Polymerdispersion mit einer Polyhydroxylverbindung zu vermischen und anschliessend aus dem Gemisch das Wasser zu entfernen.

Die Herstellung der für die Erfindung bevorzugten kautschukelastischen Polyurethanelastomeren kann erfolgen, indem man die Polyhydroxylverbindungen mit einem Molekulargewicht über 600 mit weniger als der sich auf die Endgruppen berechnenden Menge eines Diisocyanats umsetzt, die Verbindung mit zwei reaktionsfähigen Wasserstoffatomen und einem Molekulargewicht unter 600 zumischt und die Reaktion mit einer weiteren Diisocyanatzugabe zu Ende führt. Man kann aber auch so verfahren, dass man die Polyhydroxylverbindungen mit einem Überschuss an Diisocyanaten über die zur Reaktion mit den Endgruppen erforderliche Menge umsetzt und die Menge der Verbindung mit einem Molekulargewicht unter 600 so bemisst, dass ein Überschuss über die sich auf die noch vorhandenen Isocyanatgruppen berechnende Menge vorliegt. Natürlich kann man auch das Gemisch der Polyhydroxylverbindung mit einem Molekulargewicht über 600 und der Verbindung mit einem Molekulargewicht unter 600 mit einem Überschuss an Diisocyanaten umsetzen.

Die erfindungsgemässen Formmassen können durch Dispergieren des kautschukelastischen Polymeren in einer Mischung des « endständig ungesättigten » Urethangruppen-freien Polyesters und der copolymerisierbaren Vinyl- bzw. Vinylidenverbindung bei 20 bis 80 °C hergestellt werden. Es ist selbstverständlich auch möglich, das kautschukelastische Polymere bei 20 bis 80 °C in der copolymerisierbaren Verbindung zu dispergieren und diese Dispersion mit der Dispersion des « endständig ungesättigten » Polyesters in der copolymerisierbaren Verbindung zu mischen.

Um eine vorzeitige Gelierung zu verhindern, können den erfindungsgemässen Formmassen übliche Mengen, d. h. 0,001 bis 0,1 Gew.-%, bezogen auf die Summe der Komponenten a), b) und c), Polymerisationsinhibitoren zugesetzt werden, z. B. Hydrochinon und alkylierte Hydrochinone wie Toluhydrochinon, Dimethylhydrochinon, Trimethylhydrochinon oder p-tert.-Butylhydrochinon, p-tert.-Butylbrenzcatechin, p-Benzochinon, Chloranil, Naphthochinon, Kupferverbindungen wie z. B. Kupfernaphthenat oder Kupferoctoat, Anlagerungsverbindungen von Cu(I)halogeniden an Phosphite, wie z. B. Cu(I)Cl/Triphenylphosphit, Cu(I)Cl/Trimethylphosphit, Cu(I)Cl/Tris-chloräthylphosphit oder Cu(I)Cl/Tripropylphosphit, Phenole oder Phenolderivate wie z. B. 4,4'-Bis-(2,6-di-tert.-butylphenol), 1,3,5-Trimethyl-2,4,6-tris-(3,5-di-tert.-butyl-4-hydroxy-benzyl)benzol oder 4,4'-Butyliden-bis-(6-tert.-butyl-m-kresol), sekundäre Arylamine, wie z. B. Phenyl-β-naphthylamin oder 4,4'-Bis-(α,α-dimethylbenzyl)-diphenylamin, Phenothiazine, p-Nitrosodimethylanilin und weitere Stabilisatoren, wie sie in « Methoden der organischen Chemie » (Houben-Weyl), 4. Auflage, Band XIV/1, S. 433-452, 756, Georg Thieme-Verlag, Stuttgart 1961 beschrieben sind.

Vor der Härtung können den erfindungsgemässen Formmassen übliche Mengen, vorzugsweise 0,5-5 Gew.-%, bezogen auf die Summe der Komponenten a), b) und c), Polymerisationsinitiatoren zugesetzt werden, wie z. B. Diacylperoxide wie Diacetylperoxid, Dibenzoylperoxid, Di-p-chlorbenzoylperoxid, tert.-Butylperoxid, Peroxyester wie tert.-Butylperoxyacetat, tert.-Butyl-peroxybenzoat, tert.-Butylperoctoat, Dicyclohexylperoxidicarbonat oder 2,5-Dimethylhexan-2,5-diperoctoat, Alkylperoxide wie Bis-(tert.-butylperoxybutan), Dicumylperoxid, tert.-Butylcumylperoxid, Hydroperoxide wie Cumolhydroperoxid, tert.-Butylhydroperoxid, Cyclohexanonhydroperoxid, Methyläthylketonhydroperoxid, Perketale, Acetylacetonperoxid oder Azoisobutyrodinitril.

Die erfindungsgemäss hergestellten Harzmassen können bis zu 300 Gew.-%, vorzugsweise 50-200 Gew.-%, bezogen auf die Summe der Komponenten a), b) und c), Füll- und Verstärkerstoffe aufnehmen. Als solche sind anorganische Materialien wie Schwerspat, Calciumcarbonat, Silicate, Tonerden, Kreide, Kalk, Kohle, Asbest, Glas, Metalle und organische Materialien wie Baumwolle, Sisal, Jute, Polyester, Polyamide, vorzugsweise in Form von Fasern, anzusehen. Bevorzugt werden als Verstärkerstoff Glasfasern in jeglicher Form, insbesondere auch in Form von Matten, eingesetzt.

Den Massen können auch zur Verminderung des bei der Härtung auftretenden Polymerisationsschwundes allgemein bekannte, schwundmindernde Zusätze zugesetzt werden wie thermoplastische Polymere, Polykondensate oder Polyadditionsverbindungen.

Den erfindungsgemässen Formmassen können die als chemische Verdicker bekannten Oxide und Hydroxide der Metalle der 2. Hauptgruppe des Periodensystems (s. U. Hoffmann, W. Rüdorff, Anorganische Chemie, 16. Aufl., Friedr. Vieweg & Sohn, Braunschweig 1956, Periodensystem s. 152), bevorzugt des

Magnesiums und Calciums, in Mengen von 0,1-10, vorzugsweise 1,0-3,0 Gew.-%, bezogen auf die Summe der Komponenten a), b) und c) zugesetzt werden, ferner die chemische Verdickung beschleunigende oder regelnde Zusätze, wie 0,1-0,5 Gew.-% Wasser oder Zusätze gemäss DE-OS 1 544 891, z. B. aliphatische Carbonsäuren oder partielle Phosphorsäureester, oder gemäss DE-OS 2 326 103, z. B. ein organisches Amid in wirksamen Mengen.

Das Mischen der verschiedenen Komponenten der erfindungsgemässen Formmassen erfolgt zweckmässig in Knetern, Dissolvern oder auch Walzenstühlen.

Ausserdem können natürlich, falls erwünscht, anorganische oder organische Pigmente, Farbstoffe, Gleit- und Trennmittel wie Zinkstearat, Thixotropiermittel, UV-Absorber usw. in üblichen Mengen zugeschlagen werden.

Die erfindungsgemässen Formmassen können drucklos oder unter einem Druck von 0,3-30 $N/mm^2$ bei ca. 70-180 °C gehärtet werden. Ausserdem ist die Härtung bei 15-25 °C unter Verwendung von Beschleunigern, wie z. B. Aminen, insbesondere aromatischen Aminen oder Kobaltsalzen, möglich. Aus den Formmassen lassen sich Formkörper aller Art, wie z. B. Behälter, Karosserieteile, Maschinenabdeckungen herstellen.

## Beispiele

Im folgenden angegebene Teile bedeuten Gewichtsteile, Prozente bedeuten Gewichtsprozente.

I. Kautschukelastische Polymere

A. Teilverseiftes Äthylen/Vinylacetat-Copolymerisat der Zusammensetzung

13,6 % Äthyleneinheiten
67,7 % Vinylacetat-Einheiten
18,7 % Vinylalkohol-Einheiten

(Mooney Viskosität ML 4' = 18 ; Einfriertemperatur aus Differentialthermoanalyse mit einer Aufheizzeit von 20 °C/Min. : 5 °C.

B-F : Polyurethanelastomere

| Polyurethan | Polyester | Polyisocyanat | Kettenverlängerer | $\overline{M}n$* | Einfrier-** temperatur °C |
|---|---|---|---|---|---|
| B | 1 000 g Adipinsäure/ Äthylenglykol-polyester der OH-Zahl 56 | 87 g Isomerengemisch (80 : 20) aus 2.4- und 2.6-Diisocyanatotoluol | — | 63 800 | – 30 |
| C | 1 000 g Adipinsäure/ Butandiol-1.4-polyester der OH-Zahl 52,4 | 81,2 g Isomerengemisch (80 : 20) aus 2.4- und 2.6-Diisocyanatotoluol | — | 52 300 | – 43 |
| D | 1 000 g Adipinsäure/ Propandiol-1.2/ Äthylenglykol-polyester der OH-Zahl 56,5 molares Diolverhältnis 2 : 8 | 206 g 4.4'-Diisocyanato-diphenylmethan | 35,5 g Butandiol-1.4 | 107 000 | – 28 |
| E | 1 000 g Adipinsäure/ Hexandiol-1.6/ Neopentylglykol-polyester der OH-Zahl 56,2 molares Diolverhältnis 2 : 1 | 206 g 4.4'-Diisocyanato-diphenylmethan | 33 g Butandiol-1.4 | 76 800 | – 34 |

Tabelle (Fortsetzung)

B-F : Polyurethanelastomere

| Polyurethan | Polyester | Polyisocyanat | Kettenverlängerer | $\overline{M}n$* | Einfrier-** temperatur °C |
|---|---|---|---|---|---|
| F | 1 000 g Adipinsäure/ Butandiol-1.4-polyester der OH-Zahl 52,4 | 163,5 g 4.4'-Diisocyanato-diphenylmethan | 16,8 Butandiol-1.4 | 62 600 | – 39 |

* Membranosmose mit Dioxan als Lösungsmittel.
** Differential-Thermoanalyse mit einer Aufheizrate von 20 °C/min.

II. Formmassen

Beispiel 1

332 g Isophthalsäure werden mit 318 g Diäthylenglykol bei 180 °C unter Stickstoff verestert, bis die Säurezahl kleiner als 2 ist. Danach werden die Temperatur auf 100 °C erniedrigt und 196 g Maleinsäureanhydrid und 0,15 g Hydrochinon zugefügt. Die Reaktion wird bei 100 °C fortgesetzt, bis die Differenz aus Gesamtsäurezahl und Halbestersäurezahl kleiner als 5 ist. Anschliessend wird eine 44 %ige Lösung des erhaltenen Polyesters in Styrol hergestellt.

In dieser Lösung werden 12 % des kautschukelastischen Polymeren unter Durchleiten von Luft bei 60 °C gelöst oder dispergiert.

Die erhaltene Lösung oder Dispersion wird zu Platten (20 × 20 cm) vergossen und nach Zugabe von 3 Teilen Benzoylperoxid-Paste (50 %ig in Dibutylphthalat) 3 Stunden bei 75 °C gehärtet. Danach wird zusätzlich 15 Stunden bei 90 °C getempert. Aus den erhaltenen Platten werden Normkleinstäbe für die Messung der Schlagzähigkeit und der Erweichungstemperatur geschnitten. Die Ergebnisse zeigt die Tabelle 1.

Tabelle 1

| Lieferform Kautschuk-elast. Polymer | Aussehen | Viskosität (mPa.s) | gehärtetes Produkt Schlagzähigkeit ($kJ/m^2$) | Erweichungs-temp.* (°C) |
|---|---|---|---|---|
| — | klar | 120 | 15 | 76 |
| A | klar | 6 800 | 50 | 76 |
| B | leicht trüb | 3 650 | 49 | 75 |
| C | klar | 3 100 | 65 | 74 |
| D | leicht trüb | 6 400 | 71 | 72 |

* Differential-Thermoanalyse mit einer Aufheizrate von 20 °C/min.

Beispiel 2

332 g Isophthalsäure werden mit 402 g Dipropylenglykol bei 180 °C unter Stickstoff verestert, bis die Säurezahl unter 2 abgesunken ist. Danach werden die Temperatur auf 100 °C erniedrigt und 196 g Maleinsäureanhydrid und 0,15 g Hydrochinon zugefügt. Die Reaktion wird bei 100 °C fortgesetzt, bis die Differenz aus Gesamtsäurezahl und Halbestersäurezahl kleiner als 5 ist. Anschliessend wird eine 44 %ige Lösung des ungesättigten Polyesters in Styrol hergestellt.

Weitere Verarbeitung wie in Beispiel 1. Die Ergebnisse zeigt die Tabelle 2.

(Siehe Tabelle 2 Seite 10 f.)

Tabelle 2

| Lieferform Kautschuk-elast. Polymer | Aussehen | Viskosität (mPa.s) | gehärtetes Produkt Schlagzähigkeit (kJ/m²) | Erweichungstemp. (°C) |
|---|---|---|---|---|
| — | klar | 50 | 11,4 | 77 |
| E | leicht trüb | 5 200 | 71 | 77 |

Beispiel 3

332 g Isophthalsäure werden mit 156 g Neopentylglykol und 150 g Diäthylenglykol bei 180 °C unter Stickstoff verestert, bis die Säurezahl unter 2 abgesunken ist. Danach werden die Temperatur auf 100 °C erniedrigt und 196 g Maleinsäureanhydrid und 0,15 g Hydrochinon zugegeben. Die Reaktion wird bei 100 °C fortgesetzt, bis die Differenz aus Gesamtsäurezahl und Halbestersäurezahl kleiner als 5 ist. Anschliessend wird der ungesättigte Polyester 44 %ig in Styrol gelöst.

Weitere Verarbeitung wie in Beispiel 1. Die Ergebnisse zeigt die Tabelle 3.

Tabelle 3

| Lieferform Kautschuk-elast. Polymer | Aussehen | Viskosität (mPa.s) | gehärtetes Produkt Schlagzähigkeit (kJ/m²) | Erweichungstemp. (°C) |
|---|---|---|---|---|
| — | klar | 100 | 15 | 76 |
| E | klar | 8 400 | 64 | 75 |
| F | klar | 6 600 | 62 | 76 |

Beispiel 4

332 g Isophthalsäure werden mit 229 g 2-Äthylpropandiol-1,3 und 85 g Diäthylenglykol bei 180 °C unter Stickstoff verestert, bis die Säurezahl unter 2 abgesunken ist. Danach werden die Temperatur auf 100 °C erniedrigt und 196 g Maleinsäureanhydrid und 0,15 g Hydrochinon zugefügt. Die Reaktion wird bei 100 °C fortgesetzt, bis die Differenz aus Gesamtsäurezahl und Halbestersäurezahl kleiner als 5 ist. Anschliessend wird der ungesättigte Polyester 44 %ig in Styrol gelöst.

Weitere Verarbeitung wie in Beispiel 1 ; die Ergebnisse zeigt die Tabelle 4.

Tabelle 4

| Lieferform Kautschuk-elast. Polymer | Aussehen | Viskosität (mPa.s) | gehärtetes Produkt Schlagzähigkeit (kJ/m²) | Erweichungstemperatur (°C) |
|---|---|---|---|---|
| — | klar | 250 | 11,8 | 76 |
| D | klar | 6 030 | 55 | 75 |
| E | klar | 4 500 | 55 | 75 |

Die spezifischen Bruchflächenenergien für die Copolymerisate aus a) endständig ungesättigten Polyestern und b) Styrol betragen :

(Siehe Tabelle Seite 11 f.)

| Beispiel | J/cm² |
|---|---|
| 1 | $4,5 \times 10^{-2}$ |
| 2 | $2,9 \times 10^{-2}$ |
| 3 | $3,5 \times 10^{-2}$ |
| 4 | $2,2 \times 10^{-2}$ |

**Ansprüche**

1. Härtbare Formmasse aus

a) 5 bis 77 Gew.-Teilen eines ungesättigten Urethangruppenfreien Polyesters,
b) 20 bis 80 Gew.-Teilen einer damit copolymerisierbaren Vinyl- oder Vinylidenverbindung, und
c) 3 bis 25 Gew.-Teilen eines kautschukelastischen Polymeren mit einer Glasübergangstemperatur zwischen − 90 und 10 °C,

dadurch gekennzeichnet, daß der Polyester a) endständig ungesättigt ist und daß die spezifische Bruchflächenenergie des bei der Härtung entstehenden Copolymerisates aus a) und b) > $0,5 \cdot 10^{-2}$, vorzugsweise zwischen $0,5 \cdot 10^{-2}$ und $10^{-1}$, J/cm² beträgt.

2. Verfahren zur Herstellung von Formmassen nach Anspruch 1, dadurch gekennzeichnet, daß man in erster Stufe 1 Mol mindestens einer organischen Dicarbonsäure mit 1,05-2,0 Mol mindestens eines organischen Diols vorzugsweise in der Schmelze bei 150-220 °C, gegebenenfalls in Anwesenheit üblicher Inhibitoren, unter Wasserabspaltung verestert und in zweiter Stufe 1 Mol des so erhaltenen, OH-Gruppen enthaltenden Vorproduktes mit der etwa äquivalenten Menge, vorzugsweise 1,9 bis 2,2 Mol, mindestens eines α,β-ethylenisch ungesättigten Dicarbonsäureanhydrids, der entsprechenden ungesättigten Dicarbonsäure oder ihres Monoesters bei 60-140 °C in der Schmelze addiert oder, wie für die 1. Stufe beschrieben worden ist, umsetzt und

5 bis 77 Gew.-Teile des so erhaltenen « endständig ungesättigten » Urethangruppen-freien Polyesters a) mit
20 bis 80 Gew.-Teilen einer damit copolymerisierbaren Vinyl- oder Vinylidenverbindung b),
3 bis 25 Gew.-Teilen eines kautschukelastischen Polymeren c) und gegebenenfalls weiteren Hilfsmitteln und Zusätzen

mischt mit der Maßgabe, daß man den Polyester a) so auswählt, daß die spezifische Bruchflächenenergie des bei der Härtung entstehenden Copolymerisates aus a) und b) > $0,5 \cdot 10^{-2}$, vorzugsweise zwischen $0,5 \cdot 10^{-2}$ und $10^{-1}$, J/cm² beträgt.

3. Verwendung der Formmassen nach Anspruch 1 zur Herstellung von Formkörpern.

**Claims**

1. A hardenable moulding composition of

a) 5 to 77 parts, by weight, of an unsaturated urethane-group-free polyester,
b) 20 to 80 parts, by weight, of a vinyl or vinylidene compound copolymerisable therewith, and
c) 3 to 25 parts, by weight, of an elastomeric polymer having a glass transition temperature of between − 90 and 10 °C,

characterised in that the polyester a) is terminally unsaturated and in that the specific fracture surface energy of the copolymer of a) and b) formed during hardening is > $0.5 \times 10^{-2}$, preferably between $0.5 \times 10^{-2}$ and $10^{-1}$, J/cm².

2. Process for the production of moulding compositions according to Claim 1, characterised in that, in a first stage, 1 mole of at least one organic dicarboxylic acid is esterified with 1.05-2.0 moles of at least one organic diol preferably in the melt at 150-220 °C, optionally in the presence of conventional inhibitors, with elimination of water and, in a second stage, 1 mole of the resulting preliminary product containing OH-groups is added or reacted in the same way as described for the first stage with an approximately equivalent quantity, preferably 1.9 to 2.2 moles, of at least one α,β-ethylenically unsaturated dicarboxylic acid anhydride, the corresponding unsaturated dicarboxylic acid or the mono-ester thereof in the melt at 60-140 °C and

5 to 77 parts, by weight, of the resulting « terminally unsaturated » urethane-group-free polyester a)

are mixed with

20 to 80 parts, by weight, of a vinyl or vinylidene compound b) copolymerisable therewith and

3 to 25 parts, by weight, of an elastomeric polymer c) and optionally other auxiliaries and additives,

with the proviso that the polyester a) is selected so that the specific fracture surface energy of the copolymer of a) and b) formed during hardening is $> 0.5 \times 10^{-2}$, preferably between $0.5 \times 10^{-2}$ and $10^{-1}$, $J/cm^2$.

3. Use of the moulding compositions according to Claim 1 for the production of moulded articles.

**Revendications**

1. Matière à mouler durcissable consistant en

a) 5 à 77 parties en poids d'un polyester insaturé exempt de groupes uréthanne,

b) 20 à 80 parties en poids d'un composé vinylique ou vinylidénique copolymérisable avec ce polyester, et

c) 3 à 25 parties en poids d'un polymère élastique à la manière d'un caoutchouc, présentant une température de transition vitreuse comprise entre − 90 et 10 °C,

caractérisée en ce que le polyester a) est insaturé en positions terminales et en ce que l'énergie spécifique des surfaces de rupture du copolymère de a) et b) formé au durcissement est supérieure à $0,5 \cdot 10^{-2}$, et de préférence comprise entre $0,5 \cdot 10^{-2}$ et $10^{-1}$ $J/cm^2$.

2. Procédé de préparation des matières à mouler selon la revendication 1, caractérisé en ce que, dans un premier stade, on estérifie 1 mole d'au moins un acide organique dicarboxylique par 1,05 à 2,0 moles d'au moins un diol organique, de préférence à l'état fondu à une température de 150 à 220 °C, le cas échéant en présence d'inhibiteurs usuels, avec séparation d'eau et, dans un deuxième stade, on fixe par addition ou bien, comme décrit pour le premier stade, on fait réagir 1 mole du produit intermédiaire obtenu, contenant des groupes OH, sur la quantité à peu près équivalente, de péférence 1,9 à 2,2 moles, d'au moins un anhydride d'acide dicarboxylique à insaturation α,β-éthylénique, de l'acide dicarboxylique insaturé correspondant ou d'un monoester de cet acide à une température de 60 à 140 °C à l'état fondu, et on mélange

5 à 77 parties en poids du polyester « insaturé en positions terminales », exempt de groupes uréthanne, a) ainsi obtenu avec

20 à 80 parties en poids d'un composé vinylique ou vinylidénique b) copolymérisable avec ce polyester,

3 à 25 parties en poids d'un polymère c) élastique à la manière d'un caoutchouc et, le cas échéant, d'autres produits auxiliaires et additifs,

avec la condition que l'on choisit le polyester a) de telle sorte que l'énergie spécifique des surfaces de rupture du copolymère de a) et b) formé dans le durcissement soit supérieure à $0,5 \times 10^{-2}$ $J/cm^2$, de préférence compris entre $0,5 \times 10^{-2}$ et $10^{-1}$ $J/cm^2$.

3. Utilisation des matières à mouler selon les revendications 1 et 2 pour la préparation de corps moulés.